(19) Europäisches Patentamt
European Patent Office
Office européen des brevets

(11) **EP 3 655 591 B1**

(12) **FASCICULE DE BREVET EUROPEEN**

(45) Date de publication et mention de la délivrance du brevet:
**19.10.2022  Bulletin 2022/42**

(21) Numéro de dépôt: **18758916.3**

(22) Date de dépôt: **12.07.2018**

(51) Classification Internationale des Brevets (IPC):
**E02D 1/02** *(2006.01)*       **G01N 3/10** *(2006.01)*

(52) Classification Coopérative des Brevets (CPC):
**E02D 1/022; G01N 3/10**

(86) Numéro de dépôt international:
**PCT/FR2018/051770**

(87) Numéro de publication internationale:
**WO 2019/016448 (24.01.2019 Gazette 2019/04)**

(54) **PÉNÉTROMÈTRE STATIQUE ET PROCÉDÉ DE MESURE ASSOCIÉ**

STATISCHES PENETROMETER UND VERFAHREN ZUR VERWENDUNG

STATIC PENETROMETER AND METHOD OF USE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **18.07.2017   FR 1756819**

(43) Date de publication de la demande:
**27.05.2020   Bulletin 2020/22**

(73) Titulaire: **Equatech.R&D**
**74960 Annecy (FR)**

(72) Inventeur: **RIEGEL, Pierre**
**74330 Poisy (FR)**

(74) Mandataire: **IP Trust**
**2, rue de Clichy**
**75009 Paris (FR)**

(56) Documents cités:
| | |
|---|---|
| EP-A1- 0 022 116 | BE-A- 876 648 |
| CH-A- 245 306 | CH-A- 509 586 |
| FR-A1- 2 584 186 | GB-A- 681 626 |
| GB-A- 2 159 959 | US-A- 4 302 967 |

## Description

## DOMAINE DE L'INVENTION

La présente invention concerne le domaine de la géotechnique et de la géologie. Elle concerne en particulier un dispositif de mesure de la résistance à la pénétration d'un sol, appelé communément un pénétromètre, et un procédé de mesure associé.

## ARRIERE PLAN TECHNOLOGIQUE DE L'INVENTION

La compacité des sols est habituellement mesurée, soit en mode statique, soit en mode dynamique, par un dispositif de mesure appelé pénétromètre. Un pénétromètre comporte classiquement des tiges raccordées bout à bout pour former un train de tiges au bout duquel est fixée une pointe de mesure, destinée à s'enfoncer dans le sol sur des profondeurs pouvant atteindre plusieurs dizaines de mètres.

En mode statique, le train de tiges est poussé par des vérins, provoquant l'enfoncement progressif de la pointe de mesure ; cette dernière mesure la résistance de pointe et éventuellement le frottement latéral sur un manchon cylindrique situé au-dessus de la pointe. Ces mesures sont enregistrées de manière continue ou discontinue selon un pas régulier. La mesure statique de la résistance à la pénétration du sol est sans conteste la plus précise car elle est réalisée directement sur la pointe de mesure, au fond du sondage.

Ce mode de mesure statique se heurte néanmoins à quelques difficultés. Lorsque la résistance du sol est importante (sols très compacts), il devient très complexe d'appliquer une poussée suffisante pour générer l'enfoncement de la pointe. Par ailleurs, quand la pointe de mesure et le train de tiges sont enfoncés à plusieurs mètres, le frottement exercé par le sol sur le train de tiges doit également être vaincu par une forte poussée pour poursuivre l'enfoncement. Il en résulte que le poids, la puissance et la qualité de l'ancrage des machines qui actionnent les vérins ne sont parfois pas suffisants pour assurer en toutes circonstances une mesure en mode statique.

Il existe par ailleurs un autre mode de mesure dit mode dynamique basé sur l'enfoncement de la pointe par battage du train de tiges. Le battage est réalisé en faisant chuter une masse ou un marteau sur une enclume enfonçant le train de tiges par à-coups. Connaissant l'énergie libérée par la chute de la masse et connaissant l'enfoncement par à-coup, on calcule la résistance à la pénétration du sol, compte tenu de divers coefficients de perte d'énergie. Ce mode dynamique présente une plus grande capacité de pénétration que le mode statique, en particulier dans les sols de compacité élevée. Une mesure en mode dynamique est néanmoins beaucoup moins précise qu'une mesure en mode statique et ne donne qu'une information partielle de la résistance du sol en fonction de la profondeur, du fait de l'enfoncement par à-coup et en général de la non dissociation de la résistance de pointe par rapport aux frottements latéraux parasites.

Le document FR2584186 décrit un dispositif de mesure des caractéristiques des sols par pénétration dynamique comprenant un train de tiges pleines se terminant par une pointe et coulissant à l'intérieur d'un train de tiges creuses, et une tête de battage rigidement solidaire des tiges creuses et élastiquement solidaire des tiges pleines par interposition d'un ressort. La chute d'un mouton sur la tête de battage provoque l'enfoncement des trains de tiges. Pendant le relevage et la nouvelle chute du mouton (durée 0,3 à 5 secondes), le ressort se détend et la pointe continue à s'enfoncer jusqu'à ce que la réaction du sol soit égale à l'effort de compression du ressort. Ce dispositif présente l'inconvénient de ne faire, entre deux enfoncements dynamiques par chute d'un mouton sur la tête de battage, que des mesures ponctuelles et discontinues en mode statique, à des profondeurs aléatoires dépendant de la résistance du sol.

D'autres pénétromètres dits statiques dynamiques, sont capables de travailler en mode mixte dynamique et statique, dès que le mode tout statique n'est plus possible, typiquement en présence de couches de sol présentant une compacité élevée, la résistance à la pénétration devenant trop importante.

On connaît notamment le document EP2535460, qui décrit un dispositif comprenant une tige de mesure terminée par une pointe de mesure, un tube de protection disposé autour de la tige de mesure, des moyens de descente et de relevage pour effectuer l'enfoncement dans le sol en mode statique, des moyens de frappe pour effectuer l'enfoncement dans le sol en mode dynamique et des moyens de mesure pour déterminer la résistance à la pénétration du sol. La construction particulière de ce dispositif permet d'isoler l'enfoncement dynamique du tube de protection extérieur, de la prise de mesure statique de la résistance en pointe et du frottement latéral à travers la tige de mesure intérieure. Ainsi la tige de mesure ne subit pas les efforts mécaniques exercés par les moyens de frappe et la prise de mesure peut être réalisée en mode statique.

La structure de ce dispositif reste néanmoins complexe et lourde à mettre en œuvre, tant du point de vue du dispositif lui-même que des équipements connexes nécessaires pour déplacer et utiliser ledit dispositif. De plus, la phase de battage ne permet pas la mesure de la résistance en pointe (celle-ci n'étant pas dissociée des frottements latéraux du manchon), et ce à l'identique du dispositif décrit dans le document FR2584186, de sorte que certaines particularités du terrain peuvent échapper à la connaissance du géologue.

## OBJET DE L'INVENTION

Un objet de la présente invention est de proposer une solution alternative aux solutions de l'état de l'art, en particulier un pénétromètre statique à assistance vibro-dynamique, simple de mise en œuvre et permettant des mesures précises et continues de la compacité d'un sol.

## BREVE DESCRIPTION DE L'INVENTION

En vue de la réalisation de l'un de ces buts, l'objet de l'invention propose un pénétromètre pour la mesure en mode statique de la résistance à la pénétration d'un sol, comprenant :

- Au moins une tige centrale terminée à une première extrémité par une pointe de mesure ;
- Au moins un tube creux entourant la tige centrale, cette dernière étant apte à coulisser à l'intérieur du tube creux ;
- Une cellule de mesure en contact avec le tube creux, destinée à transmettre une force appliquée par des moyens d'appui, de manière à provoquer un enfoncement en mode statique dans le sol du tube creux et de la tige centrale.

Le pénétromètre comprend en outre :

- un dispositif compressible étalonné assurant une liaison élastique entre la cellule de mesure et une seconde extrémité de la tige centrale ;
- un capteur de déplacement apte à mesurer la longueur du dispositif compressible étalonné ;
- des moyens supplémentaires d'enfoncement aptes à appliquer au tube creux, une vibration à une fréquence déterminée, ladite fréquence déterminée étant comprise entre 35 et 100

Selon d'autres caractéristiques avantageuses et non limitatives de l'invention, prises seules ou selon toute combinaison techniquement réalisable :

- la cellule de mesure est solidaire du tube creux ;
- les moyens supplémentaires d'enfoncement sont couplés à la cellule de mesure ;
- les moyens supplémentaires d'enfoncement sont directement couplés au tube creux ;
- les moyens supplémentaires d'enfoncement sont composés par au moins un dispositif hydraulique ou électrique de vibro-fonçage ;
- l'énergie unitaire, par impulsion, développée par les moyens supplémentaires d'enfoncement est comprise entre 25 et 400 Joules ;
- le capteur de déplacement est apte à mesurer en continu la longueur du dispositif compressible étalonné, au cours de l'enfoncement ;
- la cellule de mesure s'étend autour du dispositif compressible étalonné et comporte des lumières permettant de visualiser l'allongement ou la rétraction dudit dispositif compressible étalonné ;
- la raideur du dispositif compressible étalonné est adaptée à la dureté du sol ;

- le dispositif compressible est formé par un ressort étalonné ;
- le dispositif compressible est formé par une pluralité de rondelles Belleville ;
- le pénétromètre comprend un capteur de force maintenu dans la cellule de mesure et disposé en série avec le dispositif compressible étalonné ;
- le capteur de force est une jauge de contrainte ;
- le capteur de force est apte à mesurer en continu la force s'exerçant entre la cellule de mesure et le dispositif compressible étalonné, au cours de l'enfoncement ;
- le capteur de force est apte à être désactivé pendant l'application de la vibration par les moyens supplémentaires d'enfoncement ;
- les moyens d'appui aptes à appliquer une force à la cellule de mesure, pour effectuer un enfoncement dans le sol en mode statique du tube creux et de la tige centrale ;
- le pénétromètre comprend un châssis muni d'au moins un élément de liaison mécanique destiné à être connecté à un massif de réaction ;
- ledit massif de réaction est choisi parmi une grue, une pelle mécanique ou un poids lourds ;
- le pénétromètre comprend un contrôleur électronique configuré pour enregistrer les mesures issues du ou des capteurs et pour activer ou désactiver les moyens supplémentaires d'enfoncement.

La présente invention concerne également un procédé de mesure en mode statique de la résistance à la pénétration d'un sol au moyen du pénétromètre tel que ci-dessus, comprenant :

- L'enfoncement dans le sol en mode statique du tube creux et de la tige centrale, à une vitesse d'enfoncement ;
- La mesure, par le capteur de déplacement, de la longueur du dispositif compressible étalonné, au cours de l'enfoncement ;
- L'application d'une vibration à une fréquence déterminée par les moyens supplémentaires d'enfoncement lorsque la longueur est inférieure ou égale à une longueur prédéterminée.

Selon d'autres caractéristiques avantageuses et non limitatives de l'invention, prises seules ou selon toute combinaison techniquement réalisable :

- le procédé comprend l'arrêt de la vibration lorsque le dispositif compressible étalonné présente une longueur supérieure à la longueur prédéterminée ;
- la vitesse d'enfoncement en mode statique est de l'ordre de 2cm/s ;
- la longueur prédéterminée est une longueur minimale correspondant à la rétractation maximale du dispositif compressible étalonné ;
- le procédé comprend :

○ l'arrêt de l'enfoncement en une pluralité de profondeurs successives ;

○ à chaque arrêt de l'enfoncement, la mesure par le capteur de déplacement, de la longueur du dispositif compressible étalonné ;

○ la reprise de l'enfoncement, après ladite mesure.

• l'arrêt de l'enfoncement dure entre 10 secondes à quelques minutes.

## BREVE DESCRIPTION DES DESSINS

D'autres caractéristiques et avantages de l'invention ressortiront de la description détaillée qui va suivre en référence aux figures annexées sur lesquelles :

- la figure 1 présente un schéma de principe d'un pénétromètre conforme à l'invention ;
- la figure 2 présente un procédé de mesure conforme à l'invention ;
- les figures 3a et 3b présentent des modes de réalisation de pénétromètres selon l'invention ;
- la figure 4 présente un exemple de mesure de résistance d'un sol réalisée par le procédé selon l'invention et au moyen d'un pénétromètre conforme à l'invention ;

## DESCRIPTION DETAILLEE DE L'INVENTION

La présente invention concerne un pénétromètre 100 pour la mesure en mode statique de la résistance à la pénétration d'un sol.

Le pénétromètre 100 comprend au moins une tige centrale 1 terminée à une première extrémité par une pointe de mesure 11. A titre d'exemple, une pointe de mesure bien connue de type « Gouda » pourra être montée au niveau de la première extrémité de ladite tige centrale 1.

Le pénétromètre 100 comprend au moins un tube creux 2 entourant la tige centrale 1. Les diamètres respectifs du tube creux 2 et de la tige centrale 1 sont adaptés de sorte que cette dernière puisse coulisser librement à l'intérieur du tube creux 2.

Le couple formé par la tige centrale 1 et le tube creux 2 est destiné à s'enfoncer dans le sol, la pointe 11 en bout ayant pour fonction de mesurer la résistance à la pénétration du sol. Pour tester la résistance du sol à des profondeurs diverses, des tiges 1 et tubes 2 additionnels peuvent être raccordés bout à bout, pour former un train de couples tige/tube, pouvant être enfoncé dans le sol sur des profondeurs de plusieurs dizaines de mètres.

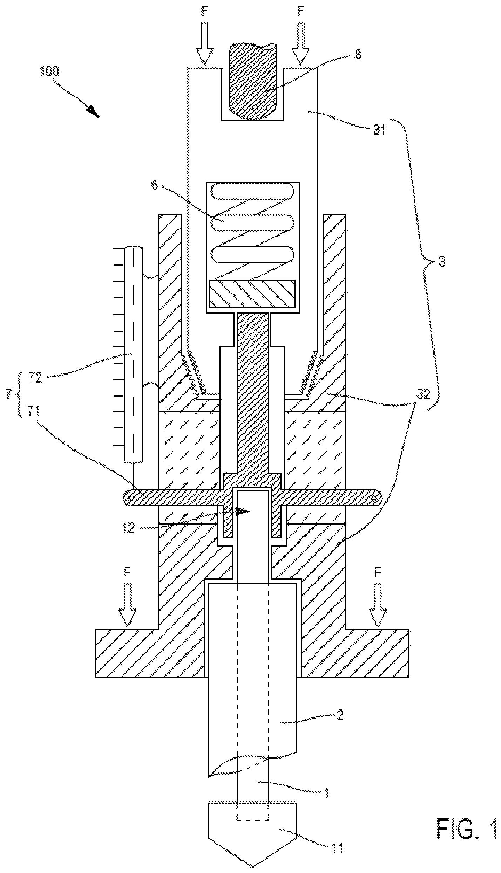

Le pénétromètre 100 comprend également une cellule de mesure 3 en contact avec le tube creux 2, comportant une tête 31 et un corps principal 32. La tête 31 pourra comme illustré sur la figure 1 être vissée sur le corps principal 32. La cellule de mesure 3 est destinée à transmettre une force F appliquée par des moyens d'appui, de manière à provoquer un enfoncement en mode statique dans le sol du couple formé par le tube creux 2 et la tige centrale 1. La force F pourra être appliquée au niveau de la tête 31 ou du corps principal 32. Les moyens d'appui susceptibles d'appliquer ladite force F seront décrits plus loin.

La cellule de mesure 3 pourra dans certains cas être solidaire du tube creux 2, notamment si on utilise le frottement du tube creux 2 dans le sol comme élément de réaction. Dans les cas où la cellule de mesure 3 est seulement en contact avec le tube creux 2, c'est la poussée par les moyens d'appui au niveau de la tête qui maintient la continuité mécanique entre cellule 3 et tube 2. Un adaptateur en tête de tube creux 2 peut permettre le passage indifférent d'un mode à l'autre.

Le pénétromètre 100 comprend en outre, un dispositif compressible 6 étalonné assurant une liaison élastique entre la cellule de mesure 3 et une seconde extrémité 12 de la tige centrale 1 (ou du train de tiges centrales). La seconde extrémité 12 se trouve à l'opposé de la première extrémité qui supporte la pointe de mesure 11.

Dans l'exemple de la figure 1, le dispositif compressible 6 étalonné est situé dans la tête 31 de la cellule de mesure 3 ; la tête 31 pourra comporter des lumières permettant notamment de visualiser l'allongement ou la rétractation dudit dispositif compressible 6.

Lorsque qu'une force est appliquée sur la cellule de mesure 3, celle-ci étant en contact ou solidaire du tube creux 2 et en liaison élastique avec la tige centrale 1, le couple tube 2 / tige 1 va s'enfoncer dans le sol. Selon la dureté du sol, la pointe 11 à la première extrémité de la tige 1 va rencontrer plus ou moins de résistance ; ainsi le dispositif compressible 6 va plus ou moins se rétracter ou s'allonger en fonction de cette résistance du sol. Un objectif du présent pénétromètre va être de mesurer le déplacement, lié aux allongements et/ou aux rétractations du dispositif compressible 6, au cours de l'enfoncement ; cela revient à mesurer la longueur du dispositif compressible 6 au cours de l'enfoncement. La charge appliquée au dispositif compressible 6, liée à la force de réaction du sol R à l'enfoncement de la pointe 11, est proportionnelle à cette longueur 1 selon l'équation : $R = k \times l$, où k est la raideur du dispositif compressible 6.

Avantageusement, la longueur du dispositif compressible étalonné 6 pourra varier de 40 à 100mm entre son état allongé et son état complètement rétracté.

Notons que la raideur du dispositif compressible étalonné 6 peut bien-sur être adaptée à la dureté du sol envisagé d'après enquête préalable.

Selon une première variante, le dispositif compressible 6 est constitué par un ressort étalonné. La charge appliquée au ressort varie linéairement avec sa longueur.

Selon une deuxième variante, le dispositif compressible étalonné 6 est constitué d'une pluralité de rondelles Belleville, montées en opposition. La déformation d'un tel assemblage est quasiment linéaire, et sa raideur peut être définie comme :

$$k = n \times {}^{P}/_{h_0}$$

, où n est le nombre de rondelles, P est la charge d'aplatissement d'une rondelle, au-delà de laquelle la rondelle ne se déforme pratiquement plus et $h_0$ est la flèche maximale.

Cette variante est avantageuse en ce que la raideur de l'assemblage de rondelles peut être facilement ajustée par l'ajout, ou le retrait de rondelles, lesquelles peuvent être assemblées dans une grande variété de dispositions : en opposition ou en série ou encore en une combinaison de ces dispositions, et en proportion variable. La raideur de l'assemblage est choisie en fonction de la dureté du sol. L'utilisation d'une pluralité de rondelles Belleville est particulièrement avantageuse en ce qu'elle autorise un encombrement vertical beaucoup plus réduit que lorsqu'un ressort est utilisé.

De manière identique à la première variante, la charge appliquée à la pluralité de rondelles Belleville est également liée à la longueur du dispositif compressible, correspondant à l'aplatissement (rétractation) et/ou l'expansion (allongement) de l'assemblage de rondelles.

Dans l'une ou l'autre des variantes décrites, le pénétromètre 100 selon l'invention, muni du dispositif compressible 6, vise à mesurer la longueur du dispositif compressible étalonné 6, proportionnelle à la résistance du sol, au fur et à mesure d'un enfoncement en mode statique.

Pour effectuer une mesure précise et continue de cette longueur, le pénétromètre 100 comprend un capteur de déplacement 7. Sur la figure 1, une pièce intermédiaire 71 est placée entre l'extrémité 12 de la tige centrale 1 et le dispositif compressible 6. La pièce intermédiaire 71 est apte à se déplacer en fonction de l'allongement ou de la rétractation du dispositif compressible 6. Ce déplacement est mesuré sur une graduation 72. Avantageusement, le capteur de déplacement 7 comporte un système d'enregistrement pour mesurer ce déplacement, représentatif de la longueur du dispositif compressible étalonné 6, en continu au cours de l'enfoncement continu de ce déplacement. A titre d'exemple, le capteur de déplacement 7 pourra effectuer une mesure de la longueur tous les dixièmes secondes ou encore toutes les secondes. On pourra avantageusement choisir un capteur de déplacement apte à mesurer une amplitude de déplacement comprise entre 40 et 100 mm, correspondant à l'amplitude de la variation de longueur du dispositif compressible 6.

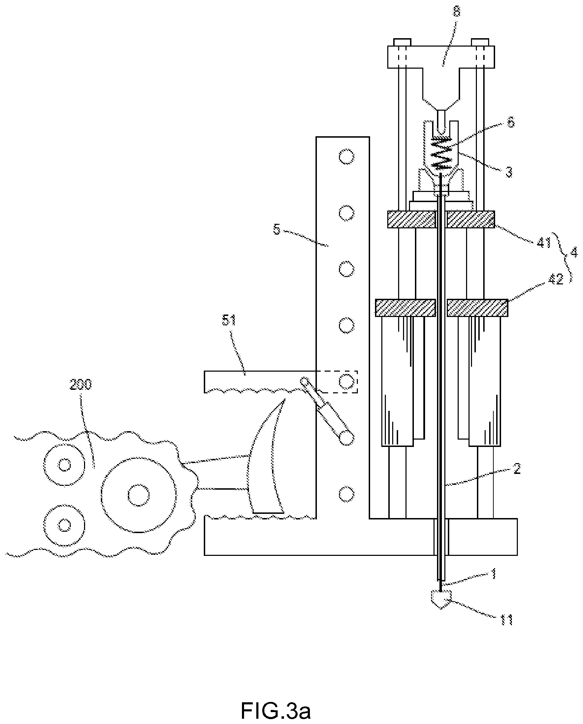

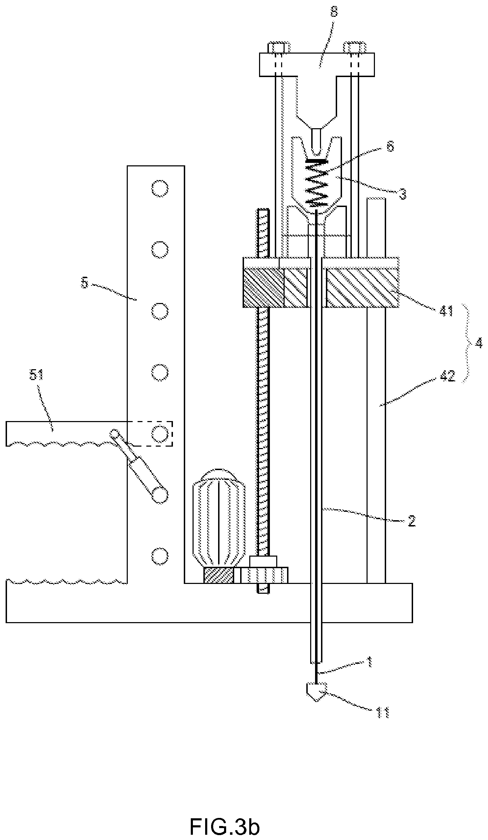

Le pénétromètre 100 comprend enfin des moyens supplémentaires 8 d'enfoncement aptes à appliquer au tube creux 2, une vibration à une fréquence déterminée. Ces moyens supplémentaires 8 pourront être soit couplés à la cellule de mesure 3 de manière à appliquer la vibration à la tête 31 (comme illustré sur les figures 3a et 3b), soit directement couplés au tube creux 2 de manière à appliquer la vibration directement audit tube 2. Dans les deux cas, la vibration est transmise au tube creux 2, en contact ou solidaire de la cellule de mesure 3. Nous verrons plus loin que cette vibration, appliquée temporairement au cours de l'enfoncement quand un sol à forte résistance est rencontré, aide à poursuivre l'enfoncement en mode statique, sans nécessiter de massif de réaction surdimensionné ou l'utilisation d'une assistance dynamique qui empêche toute mesure précise de la résistance du sol.

Le pénétromètre selon l'invention est donc basé sur une assistance vibro-dynamique, qui permet de conserver un enfoncement en mode statique et une mesure de déplacement (venant de l'allongement et/ou de la rétractation du dispositif compressible 6) continue et précise, représentative de la dureté du sol.

A titre d'exemple, les moyens supplémentaires d'enfoncement 8 sont composés par au moins un dispositif hydraulique ou électrique de vibro-fonçage, procurant une énergie mécanique par impulsion, à une fréquence déterminée.

Selon l'invention, la fréquence déterminée de la vibration appliquée par les moyens supplémentaires d'enfoncement 8 est comprise entre 35 et 100 Hz. Et l'énergie unitaire, c'est-à-dire à chaque impulsion ou coup, développée par les moyens supplémentaires d'enfoncement 8 est comprise entre 25 et 400 Joules.

Préférentiellement, le pénétromètre 100 statique selon l'invention comprend également des moyens d'appui 4, adaptés pour appliquer une force à la cellule de mesure 3, pour effectuer un enfoncement dans le sol en mode statique du couple formé par le tube creux 2 et la tige centrale 1. Ils pourront en particulier consister en un vérin hydraulique apte à développer une puissance comprise entre 5 et 15 Tonnes. La partie mobile 41 du vérin fixée au corps principal 32, applique à la cellule de mesure 3 la force nécessaire à l'enfoncement continu du couple tube/tige. La partie fixe 42 du vérin doit être fixé directement ou indirectement à un massif de réaction 200. Les moyens d'appui 4 pourront comprendre un groupe hydraulique automoteur, pour actionner le vérin 41,42.

Avantageusement, les moyens d'appui 4 sont maintenus par un châssis 5. Le châssis 5 est muni d'au moins un élément de liaison mécanique 51 destiné à être connecté à un massif de réaction 200. Cet élément de liaison mécanique 51 pourra par exemple consister en une pince hydraulique ou mécanique, ou encore un étau de même type. Le fait que le châssis 5 soit équipé d'un tel élément de liaison mécanique 51 le rend connectable à tout genre de massif de réaction 200 : grue, pelle mécanique, poids lourd, etc.

Avantageusement, le pénétromètre 100 comprend également un capteur de force (non représenté) maintenu dans la tête 31 de la cellule de mesure 3 et disposé en série avec le dispositif compressible étalonné 6. A titre d'exemple, le capteur de force est une jauge de contrainte.

Ce capteur est apte à mesurer en continu la force s'exerçant entre la cellule de mesure 3 et le dispositif compressible étalonné 6, au cours de l'enfoncement. C'est un complément de mesure intéressant à la mesure de la longueur du dispositif compressible étalonné 6 évoqué précédemment.

Notons que le capteur de force pourra, dans certains modes de réalisation du pénétromètre 100, être désactivé pendant l'application de la vibration par les moyens supplémentaires d'enfoncement 8.

Le pénétromètre 100 peut en outre comprendre un contrôleur électronique apte à enregistrer les mesures issues du ou des capteurs et à activer ou désactiver les moyens supplémentaires d'enfoncement 8 selon des critères programmés ou définis par un opérateur au cours de l'essai.

Les figures 3a et 3b présentent des modes de réalisation du pénétromètre conformes à l'invention.

Le pénétromètre 100 illustré sur la figure 3a (premier mode de réalisation) a pour particularité d'être compact tant en encombrement qu'en poids total. Il peut être transporté dans un utilitaire avec permis tourisme seulement (< 800 kg avec le groupe hydraulique).

Replié du fait de ses vérins (moyens d'appui 4) montés tête-bêche, ses dimensions sont réduites, de l'ordre du mètre en hauteur et du demi mètre en section carrée. À ceci, il convient d'ajouter le groupe hydraulique automoteur qui va permettre d'actionner les vérins et qui est monté sur chenilles (non représenté).

Ce premier mode de réalisation est avantageux en ce qu'il permet de ne transporter que la partie « utile » d'un pénétromètre (guidage, mesures, force hydraulique autonome) et à utiliser un massif de réaction 200 (la masse), mis à disposition sur le lieu du sondage à partir de disponibilités locales.

L'élément de liaison mécanique 51 pour l'accouplement entre le châssis 5 et le massif de réaction 200 consiste en une pince hydraulique enserrant la lame d'une pelle mécanique, ou bien son godet, ou fixée sur un châssis de tracteur, un camion... Alternativement, le chevillage du pénétromètre 100 sur une dalle, ou son étaiement sur poutre, est également prévu au niveau du châssis.

Une fois accouplé, le pénétromètre 100 lesté est autonome, via son groupe hydraulique automoteur en mode préférentiel. L'usage de groupes hydrauliques locaux (par exemple le moteur d'une pelle mécanique) peut être également envisagé sans modification substantielle du pénétromètre 100.

De la sorte, le pénétromètre vibro-statique 100 peut être utilisé en tout site, quel que soit la portance du sol en surface, sa pente, l'exiguïté des lieux, dans la mesure où le dispositif est transportable et le massif de réaction 200 peut être choisi selon les circonstances.

En cas de résistance du sol trop importante, le dispositif compressible 6 se rétracte jusqu'à présenter par exemple une longueur minimale ; la mesure de cette longueur minimale par le capteur de déplacement 7 provoque la mise en œuvre des moyens supplémentaires d'enfoncement 8 par le contrôleur électronique. Les moyens supplémentaires d'enfoncement 8 génèrent un vibro-fonçage à une fréquence de l'ordre de 50 Hz, avec une énergie unitaire (par impulsion) développée comprise entre 100 et 200 Joules. Appliquée à la cellule de mesure 3, une telle vibration facilite la traversée de la couche de sol résistante par le couple tube/tige. Lorsque la longueur du dispositif compressible 6 augmente, traduisant une résistance moindre du sol, le contrôleur électronique commande l'arrêt des moyens supplémentaires d'enfoncement 8 et l'enfoncement continu et régulier par les moyens d'appui 4 se poursuit.

Selon un deuxième mode de réalisation, illustré sur la figure 3b, le pénétromètre 100 présente une compacité encore accrue et est transportable par palette standardisée. Il est particulièrement avantageux pour une utilisation dans des endroits confinés, y compris en sous-sol, en conservant des capacités de fonçage très élevées.

Selon une première variante (non représentée), le pénétromètre 100 utilise un seul jeu de vérin en tant que moyen d'appui 4. Selon une deuxième variante, les moyens d'appui 4 sont composés d'un système de glissière vis à rouleaux, électrique ou hydraulique.

Pour limiter l'encombrement et le poids (<300 kg), les moyens supplémentaires d'enfoncement 8 peuvent être alimentés électriquement par une source d'énergie classique (secteur, groupe électrogène, convertisseur de batteries, etc), réduisant l'importance d'un groupe hydraulique nécessaire.

De manière analogue au premier mode de réalisation, les moyens supplémentaires d'enfoncement 8 peuvent être activés lorsque la pointe 11 rencontre un sol très résistant (se traduisant par la rétractation totale du dispositif compressible 6). A titre d'exemple, les moyens supplémentaires d'enfoncement 8 pourront appliquer un vibro-fonçage à une fréquence de l'ordre de 50 Hz, avec une énergie unitaire (par impulsion) développée comprise entre 50 et 100 Joules.

Selon un troisième mode de réalisation, le pénétromètre 100 peut être monté à demeure sur un véhicule lourd tout-terrain, à chenilles : il perd ici son caractère portable par rapport aux modes de réalisation précédemment décrits et présente un caractère totalement autonome.

Une grande puissance hydraulique est disponible et permet l'usage de vérins en tant que moyens d'appui 4 de plus grande section, une course plus importante et une énergie de vibration décuplée applicable par les moyens supplémentaires d'enfoncement 8. A titre d'exemple, l'énergie unitaire appliquée par les moyens supplémentaires d'enfoncement 8 sera comprise entre 300 et 400 Joules.

Le fonctionnement du pénétromètre 100 est similaire à celui décrit précédemment.

Ce montage permet également la mise en œuvre d'un nombre important d'asservissements hydrauliques en option, ainsi qu'une plus grande variété d'outils (sondes foncées dans le sol).

Le pénétromètre selon ce troisième mode de réalisation est particulièrement adapté aux campagnes de sondages de grande ampleur en superficie, nombre et profondeur d'essais, ainsi qu'en importance de projet.

La présente invention concerne en outre un procédé de mesure en mode statique de la résistance à la pénétration d'un sol au moyen du pénétromètre 100 selon l'un ou l'autre des différents modes de réalisation précédemment décrits.

Le procédé comprend en premier lieu l'enfoncement dans le sol en mode statique (enfoncement continu et régulier) du couple formé par le tube creux 2 et la tige centrale 1, à une vitesse d'enfoncement donnée. La vitesse d'enfoncement en mode statique est comprise entre 1 et 5 cm/s ; avantageusement, pour respecter des normes de mesures en vigueur, la vitesse d'enfoncement est de l'ordre de 2cm/s.

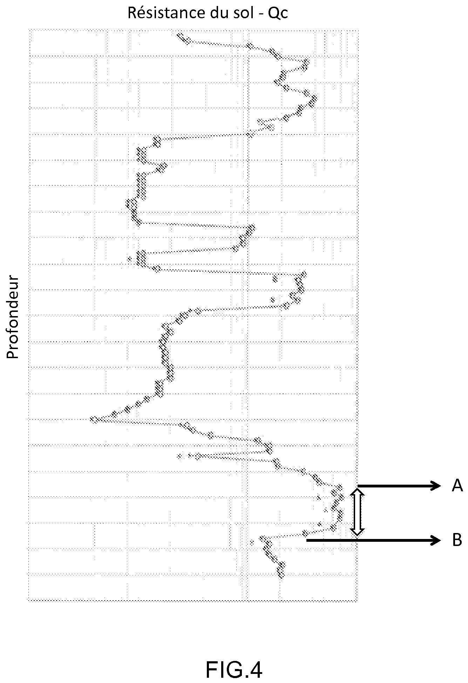

Au cours de cet enfoncement, le procédé prévoit la mesure, par le capteur de déplacement 7, de la longueur du dispositif compressible étalonné 6. Comme illustré sur la figure 4, pour des profondeurs successives d'enfoncement dans le sol, la mesure de la longueur du dispositif compressible 6 permet de remonter à la résistance en pointe du sol (Qc).

Lorsque la pointe de mesure 11 rencontre un sol très résistant, le dispositif compressible 6 se rétracte jusqu'à atteindre une longueur prédéterminée. A titre d'exemple, la longueur prédéterminée pourra être la longueur minimale du dispositif compressible 6, correspondant à sa rétractation maximale.

Pour une longueur du dispositif compressible 6 inférieure ou égale à cette longueur prédéterminée, le procédé prévoit l'application par les moyens supplémentaires d'enfoncement 8, d'un vibro-fonçage à une fréquence déterminée. Comme évoqué précédemment, la fréquence déterminée est comprise entre 35 et 100 Hz, et l'énergie unitaire (par impulsion) est comprise entre 25 et 400 Joules. La vibration appliquée, transmise au tube creux 2, soit directement, soit par l'intermédiaire de la cellule de mesure 3, permet d'aider au franchissement des couches de sol particulièrement dures.

Sur la figure 4, le point A correspond à la rencontre d'une couche de sol particulièrement dure, dont la résistance est supérieure à la capacité du massif de réaction 200 utilisé. L'application d'une vibration grâce aux moyens supplémentaires d'enfoncement 8 permet de traverser cette couche, jusqu'à atteindre une couche de dureté moindre (point B). A ce moment là, le dispositif compressible 6 va s'allonger, la pointe de mesure 11 en bout de la tige 1 rencontrant une plus faible résistance : la longueur du dispositif compressible 6 va ainsi augmenter et devenir supérieure à la longueur prédéterminée. Les moyens supplémentaires d'enfoncement 8 sont alors désactivés et l'enfoncement en mode statique reprend.

Le procédé selon l'invention permet ainsi de mesurer la résistance du sol en continu et sans interruption. Le franchissement des couches dures en profondeur se fait progressivement, par vibro-fonçage. Dès que la dureté du sol diminue, la mesure de l'allongement du dispositif compressible étalonné 6 permet d'obtenir une valeur de résistance du sol. On ne perd ainsi aucune information sur les caractéristiques du sol, qui sont mesurées en continu via les variations de longueur du dispositif compressible 6.

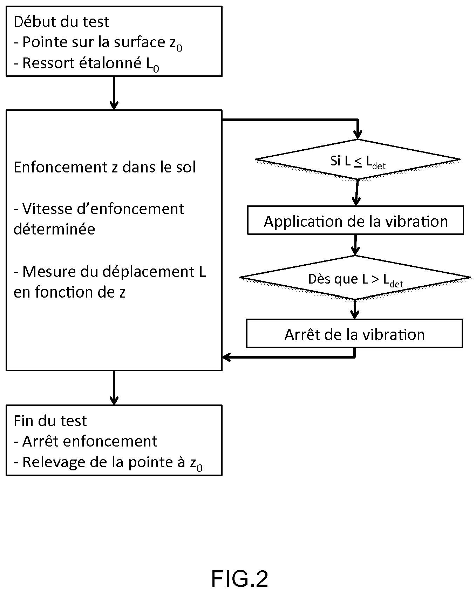

Avantageusement, le contrôleur électronique est configuré pour enregistrer les mesures issues du ou des capteurs (de déplacement 7, de force 9) et pour activer ou désactiver les moyens supplémentaires d'enfoncement 8 selon l'algorithme de la figure 2. Il peut également être configuré pour commander les moyens d'appui 4 et asservir la force appliquée à la cellule de mesure 3, à la vitesse d'enfoncement du couple tube/tige dans le sol.

Selon un mode de mise en œuvre particulier, le procédé de mesure peut comprendre l'arrêt de l'enfoncement en une pluralité de profondeurs successives. Chaque arrêt à une profondeur donnée pourra durer entre 10 secondes à quelques minutes. Pour chacun des arrêts, après une durée définie (entre 10 secondes et quelques minutes) permettant la relaxation de contraintes dans le sol au niveau de la pointe de mesure 11, une mesure par le capteur de déplacement 7, de la longueur du dispositif compressible 6 étalonné est effectuée. Après cette mesure, l'enfoncement reprend.

La demanderesse a mis en évidence que des doubles mesures, en mode statique (au cours d'un enfoncement à une vitesse donnée) et à l'arrêt, à une profondeur donnée, peuvent permettre d'identifier des sols potentiellement liquéfiables. En effet, l'écart entre la résistance du sol en mode statique et la résistance du sol à l'arrêt (ces résistances étant déduites des deux mesures de longueur du dispositif compressible, en mode statique et à l'arrêt) semble caractéristique de l'évolution des pressions interstitielles dans le sol : plus cet écart est élevé (résistance en mode statique supérieur à résistance à l'arrêt) plus le risque de liquéfaction du sol en cas de séisme est élevé. En particulier, lorsque cet écart excède 40% de la résistance du sol mesurée en mode statique, les couches de sol sont identifiées comme liquéfiables.

Le pénétromètre et le procédé selon l'invention présente donc également l'avantage de permettre des doubles mesures, capables de diagnostiquer des risques de liquéfaction de couches de sol.

**Revendications**

1. Pénétromètre (100) pour la mesure en mode statique de la résistance à la pénétration d'un sol, comprenant :

   • au moins une tige centrale (1) terminée à une première extrémité par une pointe de mesure (11) ;
• au moins un tube creux (2) entourant la tige centrale (1), cette dernière étant apte à coulisser à l'intérieur du tube creux (2) ;
• une cellule de mesure (3) en contact avec le tube creux (2), destinée à transmettre une force appliquée par des moyens d'appui (4), de manière à provoquer un enfoncement en mode statique dans le sol du tube creux (2) et de la tige centrale (1) ; le

pénétromètre (100) étant **caractérisé en ce qu'**il comprend :

• un dispositif compressible (6) étalonné assurant une liaison élastique entre la cellule de mesure (3) et une seconde extrémité (12) de la tige centrale (1) ;
• un capteur de déplacement (7) apte à mesurer la longueur du dispositif compressible (6) étalonné ;
• des moyens supplémentaires d'enfoncement (8) aptes à appliquer au tube creux (2), une vibration à une fréquence déterminée, ladite fréquence déterminée étant comprise entre 35 et 100 Hz.

2. Pénétromètre selon la revendication précédente, dans lequel la cellule de mesure (3) est solidaire du tube creux (2).

3. Pénétromètre selon l'une des revendications précédentes, dans lequel les moyens supplémentaires d'enfoncement (8) sont couplés à la cellule de mesure (3).

4. Pénétromètre selon l'une des revendications précédentes, dans lequel les moyens supplémentaires d'enfoncement (8) sont composés par au moins un dispositif hydraulique ou électrique de vibro-fonçage.

5. Pénétromètre selon l'une des revendications précédentes dans lequel les moyens supplémentaires d'enfoncement (8) développent l'énergie unitaire comprise entre 25 et 400 Joules.

6. Pénétromètre selon l'une des revendications précédentes, dans lequel le capteur de déplacement (7) est apte à mesurer en continu la longueur du dispositif compressible (6) étalonné, au cours de l'enfoncement.

7. Pénétromètre selon l'une des revendications précédentes, dans lequel la raideur du dispositif compressible (6) étalonné est adaptée à la dureté du sol.

8. Pénétromètre selon l'une des revendications précédentes, dans lequel le dispositif compressible (6) est formé par un ressort étalonné ou par une pluralité de rondelles Belleville.

9. Pénétromètre selon l'une des revendications précédentes, comprenant en outre un capteur de force maintenu dans la cellule de mesure (3) et disposé en série avec le dispositif compressible (6) étalonné.

10. Pénétromètre selon la revendication précédente, dans lequel le capteur de force est apte à mesurer en continu la force s'exerçant entre la cellule de mesure (3) et le dispositif compressible (6) étalonné, au cours de l'enfoncement.

11. Pénétromètre selon l'une des revendications précédentes, comprenant les moyens d'appui (4) aptes à appliquer une force à la cellule de mesure (3), pour effectuer un enfoncement dans le sol en mode statique du tube creux (2) et de la tige centrale (1).

12. Pénétromètre selon l'une des revendications précédentes, comprenant un châssis (5) muni d'au moins un élément de liaison mécanique (51) destiné à être connecté à un massif de réaction (200).

13. Pénétromètre selon l'une des revendications précédentes, comprenant un contrôleur électronique configuré pour enregistrer les mesures issues du ou des capteurs (7) et pour activer ou désactiver les moyens supplémentaires d'enfoncement (8).

14. Procédé de mesure en mode statique de la résistance à la pénétration d'un sol au moyen du pénétromètre (100) selon l'une des revendications précédentes, comprenant :

• l' enfoncement dans le sol en mode statique du tube creux (2) et de la tige centrale (1), à une vitesse d'enfoncement ;
• la mesure, par le capteur de déplacement (7), de la longueur du dispositif compressible (6) étalonné, au cours de l'enfoncement ;
• l' application d'une vibration à une fréquence comprise entre 35 Hz et 100 Hz déterminée par les moyens supplémentaires d'enfoncement (8) lorsque la longueur est inférieure ou égale à une longueur prédéterminée.

15. Procédé de mesure en mode statique de la résistance à la pénétration d'un sol selon la revendication précédente, comprenant :

• L'arrêt de la vibration lorsque le dispositif compressible (6) étalonné présente une longueur supérieure à la longueur prédéterminée.

16. Procédé de mesure en mode statique de la résistance à la pénétration d'un sol selon l'une des trois revendications précédentes, dans lequel la longueur prédéterminée est une longueur minimale correspondant à la rétractation maximale du dispositif compressible (6) étalonné.

17. Procédé de mesure en mode statique de la résistance à la pénétration d'un sol selon l'une des quatre revendications précédentes, comprenant :

> • l'arrêt de l'enfoncement en une pluralité de profondeurs successives ;
> • à chaque arrêt de l'enfoncement, la mesure par le capteur de déplacement (7), de la longueur du dispositif compressible (6) étalonné ;
> • La reprise de l'enfoncement, après ladite mesure.

**Patentansprüche**

1. Penetrometer (100) zum Messen des Eindringwiderstandes eines Bodens in einem statischen Modus, umfassend:

> • mindestens eine zentrale Stange (1), die an einem ersten Ende durch eine Messspitze (11) endet;
> • mindestens ein hohles Rohr (2), das die zentrale Stange (1) umgibt, wobei diese letztgenannte geeignet ist, um im Inneren des hohlen Rohrs (2) zu gleiten;
> • eine Messzelle (3) in Berührung mit dem hohlen Rohr (2), die dafür bestimmt ist, eine Kraft, die durch Stützmittel (4) aufgebracht wird, so zu übertragen, um ein Eintreiben des hohlen Rohrs (2) und der zentralen Stange (1) in den Boden in dem statischen Modus zu verursachen; wobei das Penetrometer (100) **dadurch gekennzeichnet ist, dass** es umfasst:

> • eine geeichte komprimierbare Vorrichtung (6), die eine elastische Verbindung zwischen der Messzelle (3) und einem zweiten Ende (12) der zentralen Stange (1) sicherstellt;
> • einen Wegsensor (7), der geeignet ist, um die Länge der geeichten komprimierbaren Vorrichtung (6) zu messen;
> • zusätzliche Eintreibemittel (8), die geeignet sind, um eine Vibration mit einer bestimmten Frequenz auf das hohle Rohr (2) aufzubringen, wobei die bestimmte Frequenz zwischen 35 und 100 Hz liegt.

2. Penetrometer nach dem vorstehenden Anspruch, wobei die Messzelle (3) mit dem hohlen Rohr (2) fest verbunden ist.

3. Penetrometer nach einem der vorstehenden Ansprüche, wobei die zusätzlichen Eintreibemittel (8) mit der Messzelle (3) gekoppelt sind.

4. Penetrometer nach einem der vorstehenden Ansprüche, wobei die zusätzlichen Eintreibemittel (8) aus mindestens einer hydraulischen oder elektrischen Vibrationsrammvorrichtung bestehen.

5. Penetrometer nach einem der vorstehenden Ansprüche, wobei die zusätzlichen Eintreibemittel (8) die einheitliche Energie zwischen 25 und 400 Joule entwickeln.

6. Penetrometer nach einem der vorstehenden Ansprüche, wobei der Wegsensor (7) geeignet ist, um die Länge der geeichten komprimierbaren Vorrichtung (6) im Verlauf des Eintreibens kontinuierlich zu messen.

7. Penetrometer nach einem der vorstehenden Ansprüche, wobei die Steifigkeit der geeichten komprimierbaren Vorrichtung (6) an die Härte des Bodens angepasst ist.

8. Penetrometer nach einem der vorstehenden Ansprüche, wobei die komprimierbare Vorrichtung (6) durch eine geeichte Feder oder durch eine Vielzahl von Tellerfedern ausgebildet wird.

9. Penetrometer nach einem der vorstehenden Ansprüche, ferner umfassend einen Kraftsensor, der in der Messzelle (3) gehalten und mit der geeichten komprimierbaren Vorrichtung (6) in Reihe angeordnet ist.

10. Penetrometer nach dem vorstehenden Anspruch, wobei der Kraftsensor geeignet ist, um die Kraft, die zwischen der Messzelle (3) und der geeichten komprimierbaren Vorrichtung (6) ausgeübt wird, im Verlauf des Eintreibens kontinuierlich zu messen.

11. Penetrometer nach einem der vorstehenden Ansprüche, umfassend Stützmittel (4), die geeignet sind, zum Bewirken eines Eintreibens in den Boden des hohlen Rohrs (2) und der zentralen Stange (1) in dem statischen Modus eine Kraft auf die Messzelle (3) aufzubringen.

12. Penetrometer nach einem der vorstehenden Ansprüche, umfassend ein Gestell (5), das mit mindestens einem mechanischen Verbindungselement (51) versehen ist, das dafür bestimmt ist, an eine Reaktionsmasse (200) angeschlossen zu werden.

13. Penetrometer nach einem der vorstehenden Ansprüche, umfassend eine elektronische Steuerung, die zum Aufzeichnen der Messungen, die durch den oder die Sensoren (7) ausgegeben werden, und zum Aktivieren oder Deaktivieren der zusätzlichen Eintreibemittel (8) konfiguriert ist.

14. Verfahren zum Messen des Eindringwiderstands eines Bodens in dem statischen Modus mittels des Penetrometers (100) nach einem der vorstehenden Ansprüche, umfassend:

> • Eintreiben in den Boden des hohlen Rohrs (2) und der zentralen Stange (1) in dem statischen Modus mit einer Eintreibegeschwindigkeit;
> • Messen, durch den Wegsensor (7), der Länge der geeichten komprimierbaren Vorrichtung (6) im Verlauf des Eintreibens;
> • Aufbringen einer Vibration mit einer Frequenz zwischen 35 Hz und 100 Hz, die durch die zusätzlichen Eintreibemittel (8) bestimmt wird, wenn die Länge kleiner als oder gleich einer zuvor bestimmten Länge ist.

15. Verfahren zum Messen des Eindringwiderstands eines Bodens in dem statischen Modus nach dem vorstehenden Anspruch, umfassend:

> • Stoppen der Vibration, wenn die geeichte komprimierbare Vorrichtung (6) eine Länge aufweist, die größer als die zuvor bestimmte Länge ist.

16. Verfahren zum Messen des Eindringwiderstands eines Bodens in dem statischen Modus nach einem der drei vorstehenden Ansprüche, wobei die zuvor bestimmte Länge eine minimale Länge ist, die dem maximalen Einzug der geeichten komprimierbaren Vorrichtung (6) entspricht.

17. Verfahren zum Messen des Eindringwiderstands eines Bodens in dem statischen Modus nach einem der vier vorstehenden Ansprüche, umfassend:

> • Stoppen des Eintreibens in eine Vielzahl von aufeinanderfolgenden Tiefen;
> • bei jedem Stoppen des Eintreibens, Messen durch den Wegsensor (7) der Länge der geeichten komprimierbaren Vorrichtung (6);
> • Wiederaufnehmen des Eintreibens nach dem Messen.

**Claims**

1. Penetrometer (100) for measuring the penetration resistance of a soil in static mode, comprising:

> • at least one central rod (1) which, at a first end, terminates in a measurement tip (11);
> • at least one hollow tube (2) which surrounds the central rod (1), said rod being capable of sliding inside the hollow tube (2);
> • a measurement cell (3) which is in contact with the hollow tube (2) and intended to transmit a force applied by bearing means (4) so as to drive the hollow tube (2) and the central rod (1) into the soil in static mode,

the penetrometer (100) being **characterized in that** it comprises:

> • a calibrated compressible system (6) which provides an elastic link between the measurement cell (3) and a second end (12) of the central rod (1);
> • a displacement sensor (7) which is capable of measuring the length of the calibrated compressible device (6);
> • additional driving means (8) which are capable of applying a vibration at a determined frequency to the hollow tube (2), said determined frequency being between 35 and 100 Hz.

2. Penetrometer according to the preceding claim, wherein the measurement cell (3) is integral with the hollow tube (2).

3. Penetrometer according to either of the preceding claims, wherein the additional driving means (8) are coupled to the measurement cell (3).

4. Penetrometer according to any of the preceding claims, wherein the additional driving means (8) consist of at least one hydraulic or electric vibratory driving device.

5. Penetrometer according to any of the preceding claims, wherein the additional driving means (8) develop the unit energy of between 25 and 400 Joules.

6. Penetrometer according to any of the preceding claims, wherein the displacement sensor (7) is capable of continuously measuring the length of the calibrated compressible device (6) during driving.

7. Penetrometer according to any of the preceding claims, wherein the stiffness of the calibrated compressible device (6) is adapted to the hardness of the soil.

8. Penetrometer according to any of the preceding claims, wherein the compressible device (6) is formed by a calibrated spring or by a plurality of Belleville washers.

9. Penetrometer according to any of the preceding claims, further comprising a force sensor held in the measurement cell (3) and arranged in series with the calibrated compressible device (6).

10. Penetrometer according to the preceding claim, wherein the force sensor is capable of continuously measuring the force exerted between the measurement cell (3) and the calibrated compressible device (6) during driving.

11. Penetrometer according to any of the preceding claims, comprising the bearing means (4) which are capable of applying a force to the measurement cell (3) in order to drive the hollow tube (2) and the central rod (1) into the soil in static mode.

12. Penetrometer according to any of the preceding claims, comprising a frame (5) which is provided with at least one mechanical link element (51) intended to be connected to a counterweight (200).

13. Penetrometer according to any of the preceding claims, comprising an electronic controller which is configured to record the measurements coming from the sensor(s) (7) and to activate or deactivate the additional driving means (8).

14. Method for measuring the penetration resistance of a soil in static mode by means of the penetrometer (100) according to any of the preceding claims, comprising:

   • driving the hollow tube (2) and the central rod (1) into the soil in static mode at a driving speed;
   • measuring, by the displacement sensor (7), the length of the calibrated compressible device (6) during driving; and
   • applying a vibration at a frequency of between 35 Hz and 100 Hz determined by the additional driving means (8) when the length is less than or equal to a predetermined length.

15. Method for measuring the penetration resistance of a soil in static mode according to the preceding claim, comprising:

   • stopping the vibration when the calibrated compressible device (6) has a length greater than the predetermined length.

16. Method for measuring the penetration resistance of soil in static mode according to any of the three preceding claims, wherein the predetermined length is a minimum length corresponding to the maximum retraction of the calibrated compressible device (6).

17. Method for measuring the penetration resistance of a soil in static mode according to any of the four preceding claims, comprising:

• stopping the driving at a plurality of successive depths;
• each time the driving stops, measuring the length of the calibrated compressible device (6) by means of the displacement sensor (7); and
• resuming the driving after said measurement.

FIG. 1

Début du test
- Pointe sur la surface $z_0$
- Ressort étalonné $L_0$

Enfoncement z dans le sol

- Vitesse d'enfoncement déterminée

- Mesure du déplacement L en fonction de z

Si $L \leq L_{det}$

Application de la vibration

Dès que $L > L_{det}$

Arrêt de la vibration

Fin du test
- Arrêt enfoncement
- Relevage de la pointe à $z_0$

FIG.2

FIG.3a

FIG.3b

Résistance du sol - Qc

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2584186

- EP 2535460 A